# FASCICULE DE BREVET EUROPEEN

(11) **EP 0 388 279 B1**
(45) Date de publication et mention de la délivrance du brevet: **24.11.1993**
(21) Numéro de dépôt: 90400658.2
(22) Date de dépôt: 13.03.1990
(51) Int. Cl.: B29C 67/22, F25D 23/06

(54) **Dispositif de dégazage pour appareil destiné à être rempli par une mousse et appareil comportant un tel dispositif de dégazage**
Vorrichtung zur Entgasung eines mit Schaum zu füllenden Gerätes und eine solche Vorrichtung aufweisendes Gerät
Venting device for foam filled appliance and appliance with such a device

(30) Priorité: 17.03.1989 FR 8903530
(43) Date de publication de la demande: 19.09.1990
(73) Titulaire: SOCIETE D'ELECTROMENAGER DU NORD SELNOR, F-59810 Lesquin (FR)
(72) Inventeur: Duquenne, Jean-Claude, c/o Thomson-CSF, F-92045 Paris La Défense (FR); Poillon, Jean-Marie, c/o Thomson-CSF, F-92045 Paris La Défense (FR)
(74) Mandataire: Ruellan-Lemonnier, Brigitte

(56) Documents cités:
- FR-A- 1 439 699
- FR-A- 1 573 730
- US-A- 3 719 303
- US-A- 4 311 351

## Description

L'invention se rapporte principalement à un dispositif de dégazage pour appareil destiné à être rempli par une mousse et à un appareil comportant un tel dispositif de dégazage.

Il est connu de remplir avec de la mousse des appareils pour leur donner une rigidité mécanique et/ou pour effectuer une isolation thermique. Par exemple les portes et les carcasses des réfrigérateurs et des congélateurs comportent de la mousse de polyuréthanne contenant du Fréon. L'opération de remplissage de mousse appelée moussage est gênée par la présence de l'air. Cet air s'accumulant dans les extrémités, par exemple dans les coins, diminue la résistance mécanique et l'isolation thermique de l'appareil. Pour s'affranchir de ce type d'inconvénients, il est connu de réaliser des douilles destinées à l'évacuation de l'air lors des opérations de moussage. De telles douilles ne remplissent pas parfaitement leur fonction dans la mesure où elles ne sont pas capables d'arrêter complètement la mousse et de laisser complètement sortir l'air. Pour pallier à ces inconvénients, dans les dispositifs de type connu, on est amené à augmenter la pression de la mousse. Ainsi, I'évacuation de l'air sans être parfaite est grandement améliorée mais par contre la mousse a tendance à sortir par la douille. De plus, le poids de l'appareil et augmenté ainsi que son prix de revient par suite d'une consommation supérieure de mousse sans pour autant accroître ni la résistance mécanique, ni l'isolation thermique.

On connaît aussi par le brevet français N° 1 439 699 un dispositif de dégazage lors de l'introduction de mousse entre les parois isolantes de réfrigérateurs ou similaire. Dans ce cas, on utilise des orifices ayant une faible dimension transversale limitant le passage de la mousse. Ces orifices permettent un écoulement de la mousse vers l'extérieur en cas de surpression lors de la formation de la mousse. Ces orifices jouent le rôle d'un zone de laminage, l'expansion étant réalisée par la mise à l'atmosphère de la mousse en excès.

La présente invention a pour but de fournir un nouveau dispositif comportant une douille et un fourreau du type à zone de laminage et zone d'expansion. La zone de laminage a pour fonction de freiner l'expansion de la mousse. La mousse qui est quand même passée à travers la zone de laminage se détend dans la zone d'expansion et se durcit ; ainsi elle n'a plus tendance à fuir.

La présente invention a pour objet un dispositif de dégazage lors de l'introduction de la mousse dans une enceinte du type comportant une zone de laminage à section de passage réduite destinée à freiner la progression de la mousse et une zone d'expansion à section de passage élargie destinée à provoquer l'expansion et le durcissement de la mousse, caractérisé en ce qu'il comporte une douille placée à l'intérieur d'un fourreau, la douille et le fourreau étant conformés de manière à réaliser successivement entre leurs parois une première chambre formant zone de laminage et une seconde chambre formant zone d'expansion.

Dans ce cas, la zone de laminage et la zone d'expansion ont une symétrie de révolution autour d'un axe. Le dispositif de dégazage se trouve entre la douille centrale et le fourreau extérieur. L'air est évacué par un trou pratiqué au fond de la douille.

Dans une variante particulièrement avantageuse du dispositif selon la présente invention, la zone d'expansion est suivie par une seconde zone de laminage. La seconde zone de laminage arrête de façon définitive la mousse durcie par l'expansion dans la zone d'expansion.

L'invention a aussi pour objet un dispositif caractérisé par le fait qu'en sortie de la zone d'expansion il comporte une seconde zone de laminage destinée à arrêter la mousse.

L'invention a aussi pour objet un dispositif caractérisé par le fait que la douille est réalisée en un matériau auquel la mousse n'a pas tendance à se coller.

L'invention a aussi pour objet un dispositif caractérisé par le fait que la douille est réalisée en polyamide PA 66 chargé en bisulfure de molybdène.

L'invention a aussi pour objet un dispositif caractérisé par le fait que le fourreau est réalisé en un matériau auquel la mousse a tendance à se coller.

L'invention a aussi pour objet un dispositif caractérisé par le fait que le fourreau est réalisé en ABS.

L'invention a aussi pour objet un dispositif caractérisé par le fait que la douille comporte des moyens de support d'un pivot.

L'invention a aussi pour objet un dispositif caractérisé par le fait que le fourreau comporte des ailettes destinées à accroître son ancrage dans la mousse.

L'invention a également pour objet un appareil caractérisé par le fait qu'il comporte une enceinte fermée remplie de mousse et au moins un dispositif de dégazage.

L'invention a aussi pour objet un appareil caractérisé par le fait que ledit appareil est un réfrigérateur et/ou un congélateur.

L'invention sera mieux comprise au moyen de la description ci-après et des figures données comme des exemples non limitatifs parmi lesquels :
- la figure 1 est une vue en coupe d'un dispositif de type connu ;
- la figure 2 est une vue en coupe du dispositif selon la présente invention ;
- la figure 3 est une vue de détail de la douille de la figure 2 ;
- les figures 4a à 4c sont des vues de détail du fourreau de douille de la figure 2 ;
- la figure 5 est une vue en perspective d'une porte de réfrigérateur conforme à l'invention ;
- la figure 6 est une vue en perspective d'un réfrigérateur conforme à l'invention.

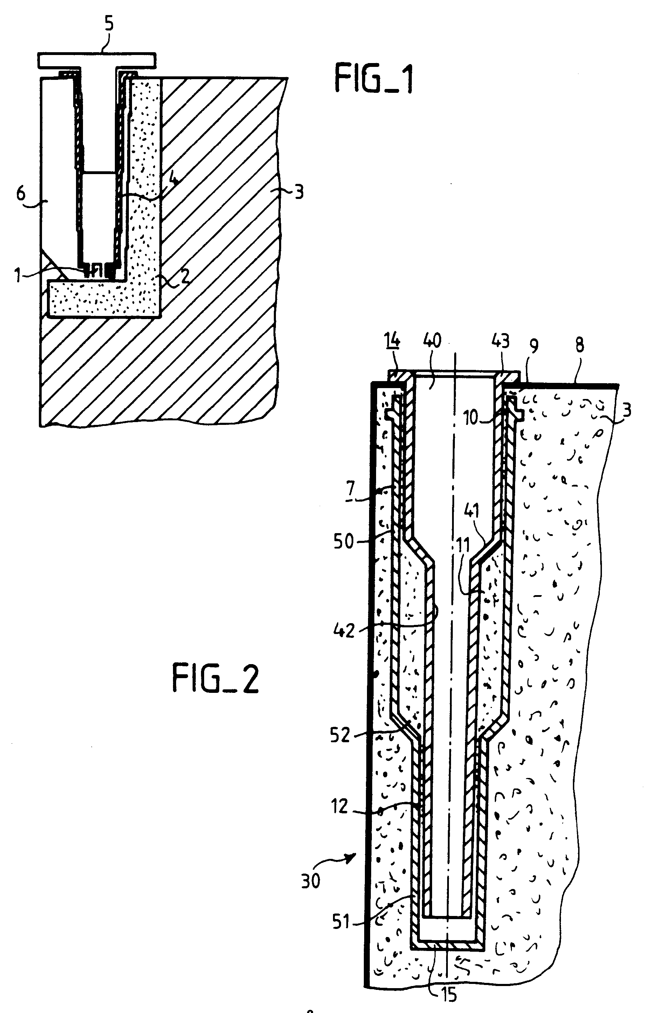

Sur la figure 1, on peut voir une douille connue 4 enfoncée dans la paroi d'un appareil contenant de la mousse 3. Le fond de la douille 4 comporte des passages ou évents 1 permettant d'évacuer l'air de l'espace 6. Pour empêcher la mousse 3 de sortir on dispose une mousse à cellules ouvertes 2 devant les passages ou évents 1 de la douille 4. On n'arrive jamais à chasser complètement l'air de l'espace 6 avec ce type de dispositif. Son efficacité est améliorée en augmentant la pression de la mousse 3. Toutefois, dans un tel cas, en plus de la consommation supérieure de mousse et de l'augmentation du poids, un peu de mousse 3 risque de passer à l'intérieur de la douille 4. Cet inconvénient est d'autant plus grave que la douille 4 est destinée à supporter un pivot 5 de porte. La présence de la mousse peut provoquer un couple résistant rendant plus difficile ou empêchant la rotation de la porte, par exemple d'un réfrigérateur.

Sur la figure 2, on peut voir un dispositif 30 selon la présente invention comportant une douille 14 placée par exemple à l'intérieur d'un fourreau 7. Entre la douille 14 et le fourreau 7 est ménagée une zone de laminage de la mousse 10 à section de passage réduite connectée à une zone d'expansion 11 à section de passage élargie. Avantageusement la zone d'expansion 11 est prolongée par une seconde zone de laminage 12 à section de passage réduite. Dans l'exemple illustré sur la figure 2, la douille 14 est creuse ou tubulaire et ouverte aux deux extrémités pour permettre l'évacuation de l'air tandis que le fourreau 7 est fermé à une de ses extrémités par un fond 15 et ouvert à son autre extrémité.

Avant l'opération de moussage, le dispositif 30 selon la présente invention est monté sur la paroi 8 d'un appareil de manière que la douille 14 et le fourreau 7 laissent un passage ou entrée 9 pour l'air. Lors de l'expansion de la mousse, l'air est chassé à travers l'entrée d'air 9, la première zone de laminage 10, la zone d'expansion 11, la seconde zone de laminage 12 et au travers de l'alèsage de la douille 14. L'air prisonnier entre la paroi 8 et la mousse est ainsi complètement évacué. La progression de la mousse 3 continue dans le dispositif 30 et est freinée par la première zone de laminage 10 à passage réduit. La mousse qui a réussi à traverser la zone de laminage 10 effectue son expansion dans la zone d'expansion 11 à passage élargi. Cette expansion provoque le durcissement de la mousse 3 et empêche la propagation de la mousse au-delà de la zone de laminage 12. La mousse remplit alors complètement l'intérieur de la paroi 8 et renforce celle-ci. Le dispositif 30 de la présente invention améliore ainsi la tenue mécanique de la paroi 8 et en même temps l'isolation thermique de l'appareil. Avantageusement, la douille 14 du dispositif 30 comporte un évidement ou logement susceptible de recevoir un pivot de porte 5 par exemple de réfrigérateur ou de congélateur.

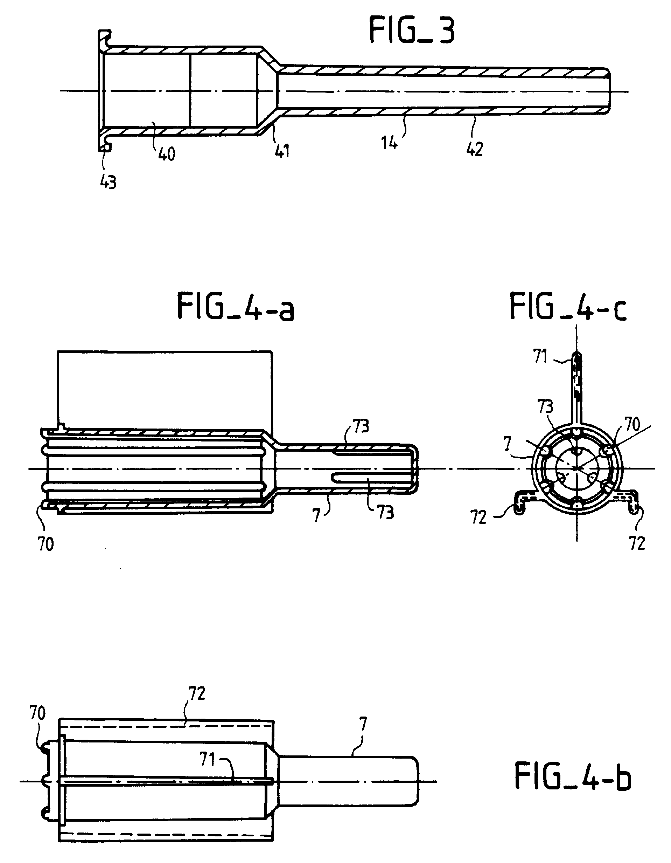

Sur les figures 2 et 3, on peut voir un exemple de réalisation particulièrement performant de douilles 14 selon la présente invention. La douille 14 comporte un tronçon ou logement 40 à parois sensiblement cylindriques terminées par un tronçon ou partie troncônique 41 suivant un angle de 45°, par exemple, par rapport à la normale à l'axe de la douille. Le tronçon tronconique 41 permet de réduire le diamètre de la douille 14 et de continuer le tronçon ou logement 40 par un tronçon ou partie allongée sensiblement cylindrique 42 ayant un diamètre plus petit que celui du tronçon ou logement 40. Le tronçon ou logement 40 destiné à recevoir un pivot de porte 5 comporte à son extrémité libre un épaulement 43 destiné à assurer l'étanchéité de la paroi 8 de l'appareil et permettant de constituer en association avec cette paroi 8 et l'extrémité libre du fourreau une entrée d'air 9. Le fourreau 7 comprend deux parties sensiblement cylindriques 50, 51 reliées par une partie tronconique 52.

Dans une variante de réalisation particulièrement avantageuse non représentée du dispositif 30, l'une ou les deux zones de laminage 10, 12 a/ont sur la/leur longueur des sections de passage pour la mousse ou l'air, qui se rétrécissent. Selon cette variante, la douille 14 comprend par exemple un tronçon ou logement 40 et un tronçon 42 cylindriques, et le fourreau 7 comporte dans l'une ou dans ses deux parties 50, 51 une cônicité de 1° par exemple.

Avantageusement, la douille 14 est constituée d un matériau comme par exemple un polyamide chargé de bisulfure de molybdène auto-lubrifié sur lequel la mousse ne colle pas. Ainsi on permet une bonne évacuation de l'air et une bonne rotation du pivot de porte.

Sur les figures 4a à 4c, on peut voir un exemple de réalisation particulièrement performant du fourreau 7 selon la présente invention. La figure 4a est une vue en coupe du fourreau 7. La figure 4b est une vue de dessus du fourreau 7. La figure 4c est une vue de face du fourreau 7. Le fourreau 7 comporte d'une part deux parties 50, 51 sensiblement cylindriques séparées par une partie troncônique 52 assurant le raccordement et d'autre part dans ces parties 50, 51 des nervures espacées 70 et 73 assurant le centrage et l'espacement entre la douille 14 et le fourreau 7. Toutefois, la partie 50 sensiblement cylindrique destinée à contenir le tronçon ou logement 40 de la douille 14 est prolongée au-delà de ce tronçon ou logement 40, autrement dit plus longue que ce tronçon ou logement 40 de façon à constituer avec le tronçon 42 de cette douille 14 la zone d'expansion 11. Les nervures espacées 70 et 73 forment entre elles des libres passages pour l'air, entre la douille 14 et le fourreau 7. Avantageusement, pour assurer une bonne tenue mécanique du dispositif selon la présente invention dans la mousse 3, le fourreau 7 comporte des ailettes 71 et 72. Dans l'exemple illustré sur la figure 4c, le fourreau 7 comporte deux ailettes 72 symétriques, courtes comportant un angle droit destiné par exemple à prendre appui sur la paroi 8 d'un appareil. L'ailette 71 est par exemple plus longue et placée dans le plan de symétrie du fourreau 7.

Avantageusement, le fourreau 7 est réalisé dans une matière comme par exemple l'ABS sur laquelle la mousse vient se coller. Ainsi on stoppe la progression de la mousse dans le dispositif selon la présente invention.

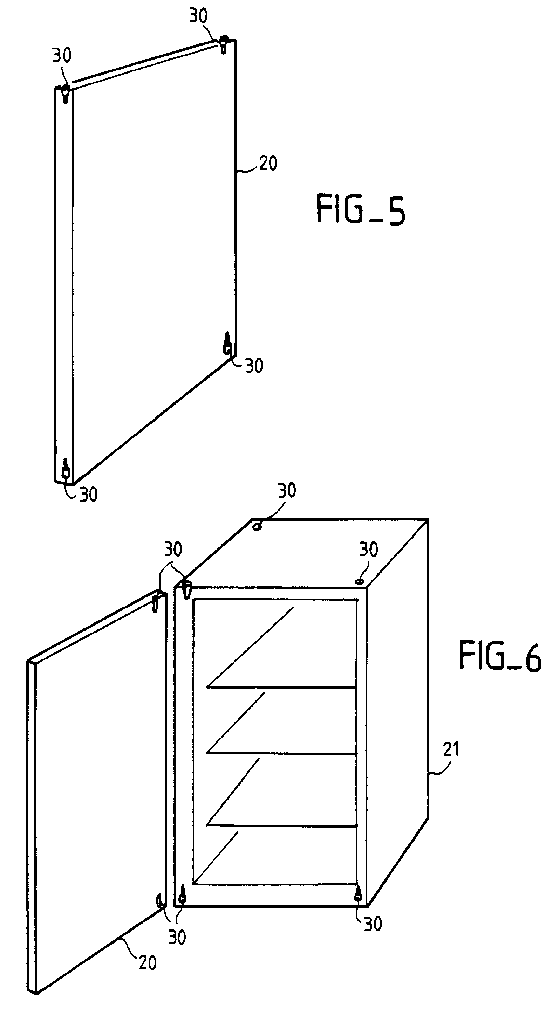

Sur la figure 5, on peut voir un exemple de réalisation d'une porte 20 selon la présente invention. La porte 20 est par exemple une porte de réfrigérateur ou de congélateur. La porte 20 de la figure 5 comporte quatre dispositifs 30 selon la présente invention. Ainsi, la porte 20 est une porte réversible puisqu'il est possible de placer les pivots d'un côté ou de l'autre de la porte 20.

Le dispositif selon la présente invention est particulièrement performant dans le cas de congélateurs. En effet, dans le cas de la présence d'air dans un congélateur dont la température interne est inférieure à -18°C, la présence d'air humide à l'intérieur de la porte provoque la formation de givre ou de glace nuisible au bon fonctionnement du congélateur et à l'isolation thermique de celui-ci.

Sur la figure 6, on peut voir un exemple de réalisation d'un dispositif de réfrigération comme par exemple un réfrigérateur ou un congélateur 21. Le dispositif comporte dans la porte 20 ou dans la carcasse le dispositif 30 selon la présente invention. Dans l'exemple illustré sur la figure 6, la carcasse 21 comporte sur le devant quatre dispositifs 30 placés aux quatre coins assurant le dégazage. Dans ce cas, il est possible de monter des pivots de porte non plus, ou pas seulement sur la porte 20 mais sur la carcasse de l'armoire 21. Toutefois, l'invention n'est pas limitée à l'utilisation du dispositif selon la présente invention pour recevoir les pivots de porte. Par exemple l'armoire 21 comporte aussi un dispositif 30 selon la présente invention placé en arrière.

De même, l'invention n'est pas du tout limitée au dispositif de refroidissement. Elle s'applique à tout dispositif comportant de la mousse expansée contenue par au moins deux parois, la mous se assurant la rigidité mécanique et/ou l'isolation thermique.

L'invention s'applique principalement à la construction des réfrigérateurs ou des congélateurs.

## Revendications

1. Dispositif (30) de dégazage lors de l'introduction de la mousse (31) dans une enceinte du type comportant une zone de laminage à section de passage réduite destinée à freiner la progression de la mousse et une zone d'expansion à section de passage élargie destinée à provoquer l'expansion et le durcissement de la mousse, caractérisé en ce qu'il comporte une douille (14) placée à l'intérieur d'un fourreau (17), la douille et le fourreau étant conformés de manière à réaliser successivement entre leurs parois une première chambre (10) formant zone de laminage et une seconde chambre (11) formant zone d'expansion.

2. Dispositif selon la revendication 1, caractérisé par le fait qu'en sortie de la chambre d'expansion (11) il comporte une seconde chambre de laminage (12) destinée à arrêter la mousse (3).

3. Dispositif selon l'une des revendications 1 et 2, caractérisé en ce que la chambre de laminage (10, 12) a sur sa longueur des sections uniformes de passage pour l'air ou la mousse.

4. Dispositif selon l'une des revendications 1 et 2, caractérisé en ce qua la chambre de laminage (10, 12) a sur sa longueur des sections de passage pour l'air ou la mousse qui se rétrécissent.

5. Dispositif selon les revendications 1 à 4, caractérisé en ce que la douille (14) ouverte aux deux extrémités comprend un premier tronçon ou logement sensiblement cylindrique (40), un deuxième tronçon ou partie allongée sensiblement cylindrique (42) et un tronçon ou partie tronconique (41) reliant ces deux tronçons sensiblement cylindriques (40, 42) et le fourreau (7) comprend une première partie sensiblement cylindrique (50) qui, ouverte aux deux extrémités et destinées à recevoir le premier tronçon ou logement sensiblement cylindrique (40) de la douille (14) est prolongée ou comporte une longueur plus grande que celle de ce premier tronçon sensiblement cylindrique (40) de la douille (14), une deuxième partie sensiblement cylindrique (51) et ouverte à une des extrémités, et une partie tronconique (52) assurant le raccordement des extrémités de ces deux parties sensiblement cylindriques (50, 51).

6. Dispositif selon les revendications 1 à 4, caractérisé en ce que la douille (14) ouverte aux deux extrémités comprend un premier tronçon ou logement sensiblement cylindrique (40), un deuxième tronçon ou partie allongée sensiblement cylindrique (42) et un tronçon ou partie tronconique (41) reliant ces deux tronçons sensiblement cylindriques et le fourreau (7) comprend une première partie sensiblement cylindrique (50) qui, destinée à recevoir le premier tronçon ou logement sensiblement cylindrique (40) de la douille (14) est prolongée ou comporte une longueur plus grande que celle de ce premier tronçon sensiblement cylindrique (40) de la douille (14), une deuxième partie (51) ouverte à une des extrémités, la première partie (50) ou la deuxième partie (51) ou les première (50) et deuxième (51) parties ayant une conicité de l'ordre de un degré, et une partie tronconique (52) assurant le raccordement des extrémités de ces deux parties (50, 51).

7. Dispositif selon l'une des revendications 1 à 6, caractérisé par le fait que la douille (14) est réalisée en un matériau auquel la mousse (3) n'a pas tendance à se coller.

8. Dispositif selon la revendication 7, caractérisé par le fait que la douille (14) est réalisée en polyamide PA66 chargé en bisulfure de molybdène.

9. Dispositif selon l'une des revendications 1 à 6, caractérisé en ce que le fourreau (7) comprend des nervures espacées (70, 73) assurant le centrage de la douille (14), l'espacement avec celle-ci, et le passage pour l'air.

10. Dispositif selon l'une des revendications 1 à 6, caractérisé par le fait que le fourreau (7) est réalisé en un matériau auquel la mousse a tendance à se coller.

11. Dispositif selon la revendication 10, caractérisé par le fait que le fourreau est réalisé en ABS.

12. Dispositif selon l'une des revendications 1 à 11, caractérisé par le fait que la douille (14) comporte des moyens de support (40) d'un pivot (5).

13. Dispositif selon l'une des revendications 1 à 2, caractérisé par le fait que le fourreau (7) comporte des ailettes (71, 72) destinées à assurer une bonne tenue mécanique du dispositif dans la mousse (3).

14. Appareil (20, 21), caractérisé par le fait qu'il comporte une enceinte fermée remplie de mousse (3) et au moins un dispositif de dégazage (30) selon l'une quelconque des revendications précédentes.

15. Appareil (21) selon la revendication 14, caractérisé par le fait que ledit appareil est un réfrigérateur et/ou un congélateur.

## Patentansprüche

1. Vorrichtung (30) zum Entgasen von Schaum beim Einfüllen in eine Schalung, mit einer Stauchzone mit einem reduzierten Durchgangsquerschnitt, die dazu vorgesehen ist, das Fortschreiten des Schaumes zu bremsen, und einer Expansionszone mit einem erweiterten Durchgangsquerschnitt, die dazu vorgesehen ist, die Expansion und die Aushartung des Schaumes herbeizuführen, **dadurch** **gekennzeichnet,** daß sie eine im Inneren einer Hülse (7) angeordnete Buchse (14) enthält, wobei die Buchse und die Hülse so aneinander angepaßt sind, daß sie aufeinanderfolgend zwischen ihren Wänden eine erste, die Stauchzone bildende Kammer (10) und eine zweite, die Expansionszone bildende Kammer (11) ausbilden.

2. Vorrichtung nach Anspruch 1, **dadurch gekennzeichnet,** daß sie am Ausgang der Expansionskammer (11) eine zweite Stauchkammer (12) enthält, die dazu vorgesehen ist, den Schaum (3) zu stoppen.

3. Vorrichtung nach einem der Ansprüche 1 und 2, **dadurch gekennzeichnet,** daß die Stauchkammer (10, 12) entlang ihrer Länge gleichförmige Durchgangsquerschnitte für Luft oder den Schaum aufweist.

4. Vorrichtung nach einem der Ansprüche 1 und 2, **dadurch gekennzeichnet,** daß die Stauchkammer (10, 12) entlang ihrer Länge sich verkleinernde Durchgangsquerschnitte für Luft oder den Schaum aufweist.

5. Vorrichtung nach den Ansprüchen 1 bis 4, **dadurch gekennzeichnet,** daß die an beiden Enden geöffnete Buchse (14) ein erstes, im wesentlichen zylindrisches Teilstück oder Aufnahmestück (40), ein zweites, im wesentlichen zylindrisches Teilstück oder gestrecktes Stück (42) und ein Teilstück oder Kegelstumpfstück (41), das die beiden im wesentlichen zylindrischen Teilstücke (40, 42) miteinander verbindet, enthält, und daß die Hülse (7) einen ersten, im wesentlichen zylindrischen Abschnitt (50), der, an beiden Seiten geöffnet und zur Aufnahme des ersten, im wesentlichen zylindrischen Teilstücks oder Aufnahmestückes (40) der Buchse (14) vorgesehen, verlängert ist oder eine Länge aufweist, die größer ist als die des ersten, im wesentlichen zylindrischen Teilstückes (40) der Buchse (14), einen zweiten, im wesentlichen zylindrischen Abschnitt (51), der an einem seiner Enden geöffnet ist, und einen kegelstumpfförmigen Abschnitt (52) zum Verbinden der Enden der beiden im wesentlichen zylindrischen Abschnitte (50, 51) enthält.

6. Vorrichtung nach den Ansprüchen 1 bis 4, **dadurch gekennzeichnet,** daß die an beiden Enden geöffnete Buchse (14) ein erstes, im wesentlichen zylindrisches Teilstück oder Aufnahmestück (40), ein zweites, im wesentlichen zylindrisches Teilstück oder gestrecktes Stück (42) und ein Teilstück oder Kegelstumpfstück (41), das die beiden im wesentlichen zylindrischen Teilstücke miteinander verbindet, enthält, und daß die Hülse (7) einen ersten, im wesentlichen zylindrischen Abschnitt (50), der, zur Aufnahme des ersten, im wesentlichen zylindrischen Teilstücks oder Aufnahmestückes (40) der Buchse (14) vorgesehen, verlängert ist oder eine Länge aufweist, die größer ist als die des ersten, im wesentlichen zylindrischen Teilstückes (40) der Buchse (14), einen zweiten Abschnitt (51), der an einem seiner Enden geöffnet ist, wobei der erste Abschnitt (50) oder der zweite Abschnitt (51) oder der erste (50) und der zweite (51) Abschnitt eine Kegeligkeit im Bereich von einem Grad aufweisen, und einen kegelstumpfförmigen Abschnitt (52) zum Verbinden der Enden der beiden Abschnitte (50, 51) enthält.

7. Vorrichtung nach einem der Asprüche 1 bis 6, **dadurch gekennzeichnet,** daß die Buchse (14) aus einem Material gebildet ist, an dem der Schaum (3) nicht zum Festkleben neigt.

8. Vorrichtung nach Anspruch 7, **dadurch gekennzeichnet,** daß die Buchse (14) aus dem Polyamid PA66 gebildet ist, das mit Molybdänbisulfid versetzt ist.

9. Vorrichtung nach einem der Ansprüche 1 bis 6, **dadurch gekennzeichnet,** daß die Hülse (7) voneinander beabstandete Rippen (70, 73) enthält, die für die Zentrierung der Buchse (14), den Abstand zwischen Buchse und Hülse sowie für den Durchgang für Luft sorgen.

10. Vorrichtung nach einem der Ansprüche 1 bis 6, **dadurch gekennzeichnet,** daß die Hülse (7) aus einem Material gebildet ist, an dem der Schaum zum Festkleben neigt.

11. Vorrichtung nach Anspruch 10, **dadurch gekennzeichnet,** daß die Hülse aus ABS gefertigt ist.

12. Vorrichtung nach einem der Ansprüche 1 bis 11, **dadurch gekennzeichnet,** daß die Hülse (14) Halteelemente (40) für einen Zapfen (5) enthält.

13. Vorrichtung nach einem der Ansprüche 1 bis 2, **dadurch gekennzeichnet,** daß die Hülse (7) Flügel (71, 72) enthält, die für eine gute mechanische Befestigung der Vorrichtung im Schaum (3) sorgen.

14. Gerät (20, 21), **dadurch gekennzeichnet,** daß es eine geschlossene, mit Schaum (3) gefüllte Schalung und wenigstens eine Vorrichtung (30) zur Entgasung nach einem der vorhergehenden Ansprüche enthält.

15. Gerät (21) nach Anspruch 14, **dadurch gekennzeichnet,** daß das Gerät ein Kühlschrank und/oder ein Gefrierschrank ist.

## Claims

1. Device (30) for degassing during the introduction of foam (31) into an enclosure of the type comprising a laminating region having a reduced passage cross-section intended to slow down the progression of the foam and an expansion region having a widened passage cross-section intended to cause expansion and hardening of the foam, characterized in that it comprises a sleeve (14) placed inside a sheath (17), the sleeve and the sheath being shaped so as to successively produce, between their walls, a first chamber (10) forming the laminating region and a second chamber (11) forming the expansion region.

2. Device according to Claim 1, characterized in that, in the outlet of the expansion chamber (11), it contains a second laminating chamber (12) intended to halt the foam (3).

3. Device according to either of Claims 1 or 2, characterized in that the laminating chamber (10, 12) has, along its length, uniform passage cross-sections for air or the foam.

4. Device according to either of Claims 1 or 2, characterized in that the laminating chamber (10, 12) has, along its length, passage cross-sections for air or the foam which become narrower.

5. Device according to Claims 1 to 4, characterized in that the sleeve (14), open at the two ends, comprises a first substantially cylindrical section or housing (40), a second substantially cylindrical extended section or part (42) and a frustoconical section or part (41) connecting these two substantially cylindrical sections (40, 42) and the sheath (7) comprises a first substantially cylindrical part (50) which, open at the two ends and intended to receive the first substantially cylindrical section or housing (40) of the sleeve (14), is extended or comprises a greater length than that of this first substantially cyclindrical section (40) of the sleeve (14) a second substantially cylindrical part (51) which is open at one of its ends, and a frustoconical part (52) which provides that the ends of these two substantially cylindrical parts (50, 51) are connected.

6. Device according to Claims 1 to 4, characterized in that the sleeve (14), open at the two ends, comprises a first substantially cylindrical section or housing (40), a second substantially cylindrical extended section or part (42) and a frustoconical section or part (41) connecting these two substantially cylindrical sections and the sheath (7) comprises a first substantially cylindrical part (50) which, intended to receive the first substantially cylindrical section or housing (40) of the sleeve (14), is extended or comprises a greater length than that of this first substantially cylindrical section (40) of the sleeve (14), a second part (51), open at one of its ends, the first part (50) or the second part (51) or the first (50) and second (51) parts having a conicity of the order of one degree, and a frustoconical part (52) which provides that the ends of these two parts (50, 51) are connected.

7. Device according to one of Claims 1 to 6, characterized in that the sleeve (14) is made of a material to which the foam (3) does not have a tendency to adhere.

8. Device according to Claim 7, characterized in that the sleeve (14) is made of PA66 polyamide laden with molybdenum bisulphide.

9. Device according to one of Claims 1 to 6, characterized in that the sheath (7) comprises spaced ribs (70, 73) which provide that the sleeve (14) is centred, that there is a space between it and the sheath (7) and that there is a passage for air.

10. Device according to one of Claims 1 to 6, characterized in that the sheath (7) is made of a material to which the foam has a tendency to adhere.

11. Device according to Claim 10, characterized in that the sheath is made of ABS.

12. Device according to one of Claims 1 to 11, characterized in that the sleeve (14) comprises means (40) for supporting a pivot (5).

13. Device according to either of Claims 1 or 2, characterized in that the sheath (7) comprises fins (71, 72) intended to provide good mechanical strength of the device in the foam (3).

14. Apparatus (20, 21), characterized in that it comprises a closed enclosure filled with foam (3) and at least one degassing device (30) according to any one of the preceding claims.

15. Apparatus (21) according to Claim 14, characterized in that the said apparatus is a refrigerator and/or a freezer.
